# EUROPEAN PATENT SPECIFICATION

(11) **EP 0 533 939 B1**
(45) Date of publication and mention of the grant of the patent: **30.08.1995**
(21) Application number: 92905794.1
(22) Date of filing: 05.03.1992
(51) Int. Cl.: A01G 31/00

(54) **VERTICAL TYPE PLANTING BED**
PFLANZENBEET VOM VERTIKALEN TYP
SUPPORT DE PLANTS DE TYPE VERTICAL

(30) Priority: 06.03.1991 JP 20438/91 U; 18.03.1991 JP 24472/91 U; 08.04.1991 JP 103790/91; 08.04.1991 JP 31802/91 U; 08.04.1991 JP 31803/91 U; 04.06.1991 JP 50700/91 U; 13.09.1991 JP 82249/91 U; 13.09.1991 JP 82250/91 U
(43) Date of publication of application: 31.03.1993
(73) Proprietor: M-HYDROPONICS RESEARCH CO., LTD., Ama-gun, Aichi 490-14 (JP)
(72) Inventor: MURAI, Kunihiko, M-Hydroponics Research Co., Ltd., Ama-gun, Aichi 490-14 (JP)
(74) Representative: Senior, Alan Murray
(86) International application number: JP9200266
(87) International publication number: WO9215194

(56) References cited:
- WO-A-90/07266
- JP-A- 1 273 525
- JP-A-49 091 833
- JP-A-50 121 032
- JP-A-59 120 037
- JP-A-62 239 930
- PATENT ABSTRACTS OF JAPAN vol. 014, no. 037 24 January 1990 & JP-A-12 73 525 ( GIFLI BAIOFUAAMU ) 1 November 1989

## Description

The present invention relates to a vertical plant-cultivating bed mainly applied to hydroponic culture.

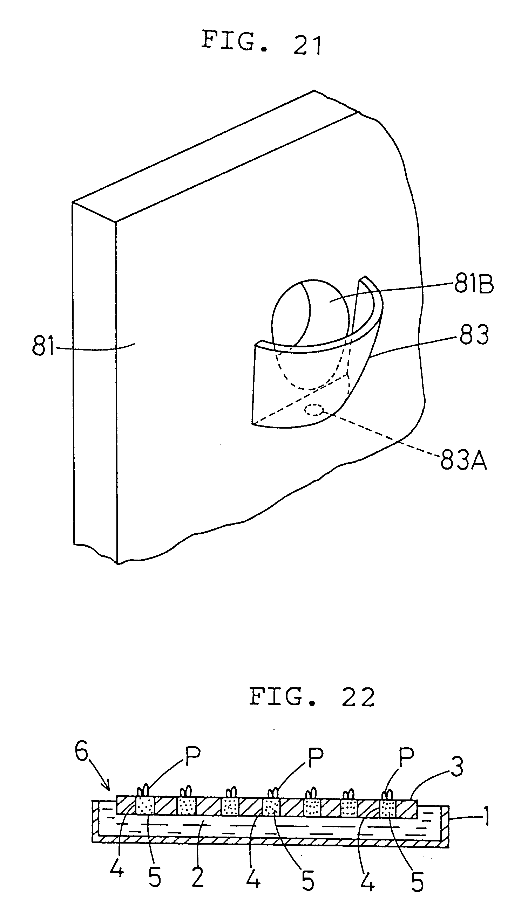

Hitherto, a horizontal plant-cultivating bed (6) as shown in Fig. 22 wherein a perforated panel (3) made of plastic such as polystyrene foam and the like is floated on the surface of water (2) containing fertilizer and the like and filled in a vessel (1), and a water-absorptive plugs (5) made of polyurethane foam supporting the plants P, is inserted into the holes (4) in the panel (3) has been provided.

Nevertheless, the conventional horizontal plant-cultivating bed (6) requires a large space, the efficiency of land use and the space heating energy are lower.

WO 90/07266 discloses a plant column having a plurality of holes for receiving plants which are watered by capillary action in a wick.

JP-A-1-273,525 discloses a plant cultivating apparatus in which water is sprayed directly onto plant holding plugs, which are inserted in inclined panels.

The present invention provides a vertical plant-cultivating bed comprising:
a perforated panel oriented substantially vertically, or at a slight inclination to the vertical, the holes of said panel being adapted to hold water-absorptive plugs carrying plants, said panel having a rear surface which is opposite to the surface from which the plants protrude; characterised by:
water distributing means disposed on or adjacent to the rear surface of said panel, a water sprinkler for supplying water to said water distributing means and at least one lamp outside said perforated panel and movable relative thereto at a predetermined speed whereby water supplied by said sprinkler, in use, flows on said rear surface to said water-absorptive plugs.

The Water sprinkled from the sprinkler (15) flows down along the rear surface (11)A of a perforated panel (11). The water flowing is absorbed by the water-absorptive plug (14) in each hole (11)B of said panel (11) and is supplied to the plants P supported by the plug (14).

According to the present invention, the efficiency of land use is much improved, (it is presumed that the efficiency of land use may be as large as approximately three times or more of that for the conventional horizontal plant-cultivating bed) and the efficiency of the energy used for the space heating is improved as much because the plant-cultivating bed is vertical.

### [BRIEF DESCRIPTION OF THE DRAWINGS]

Figs. 1 to 4 each show the first embodiment of the present invention and,
Fig. 1 is a partially omitted side sectional view, Fig. 2 is a plane view, Fig. 3 is a partially omitted side view, Fig. 4 is a partial side sectional view,

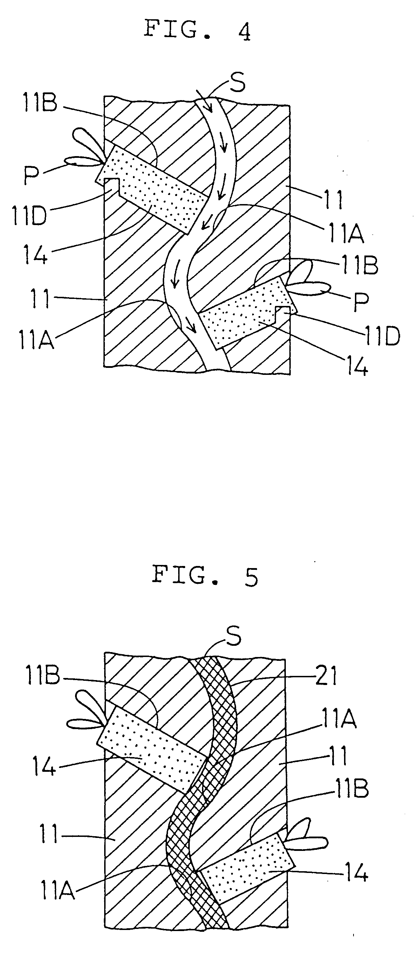

Fig. 5 show a partial side sectional view in the second embodiment of the present invention,

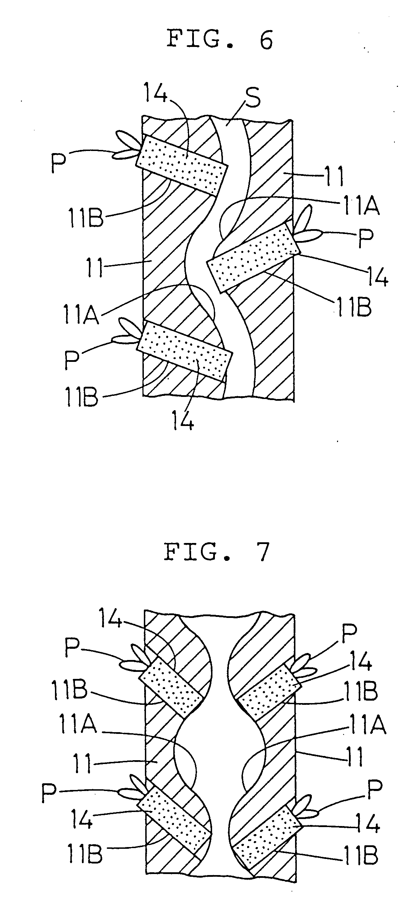

Fig. 6 is a partial side sectional view in the third embodiment of the present invention,
Fig. 7 is a side sectional view in the third embodiment of the present invention,

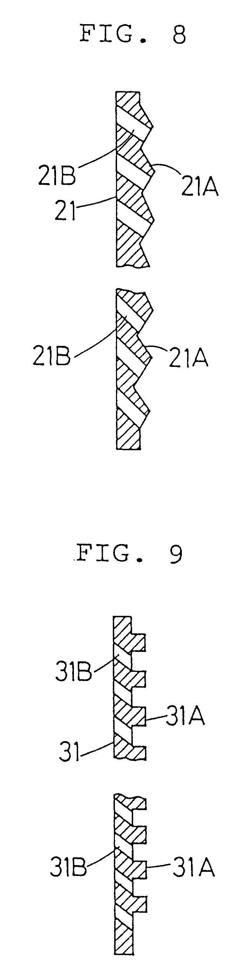

Fig. 8 is a partially omitted side sectional view in the fourth embodiment of the present invention,

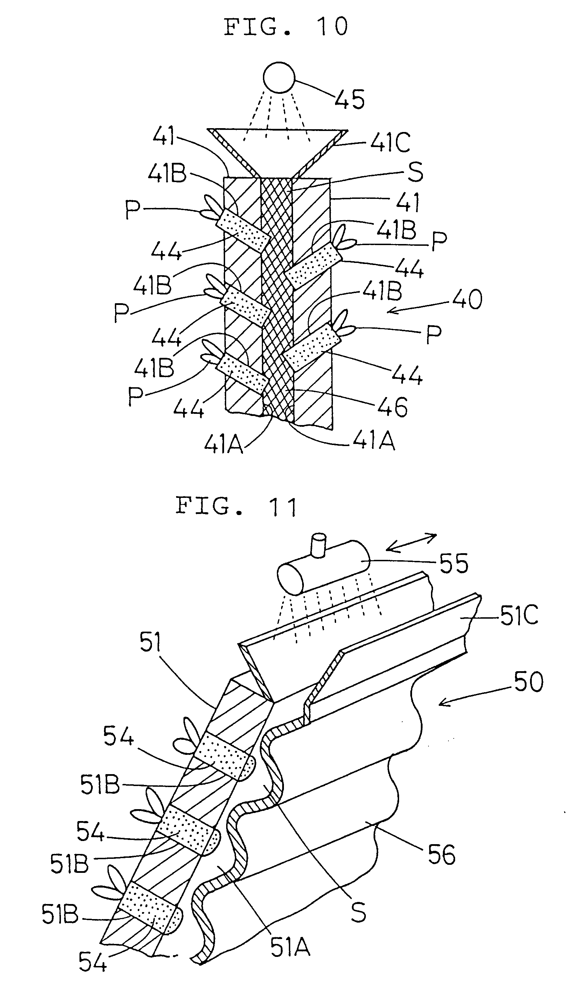

Fig. 9 is a partially omitted side sectional view in the fifth embodiment of the present invention,
Fig. 10 is a upper side sectional view in the sixth embodiment of the present invention,
Fig. 11 is a upper side sectional view in the seventh embodiment of the present invention,

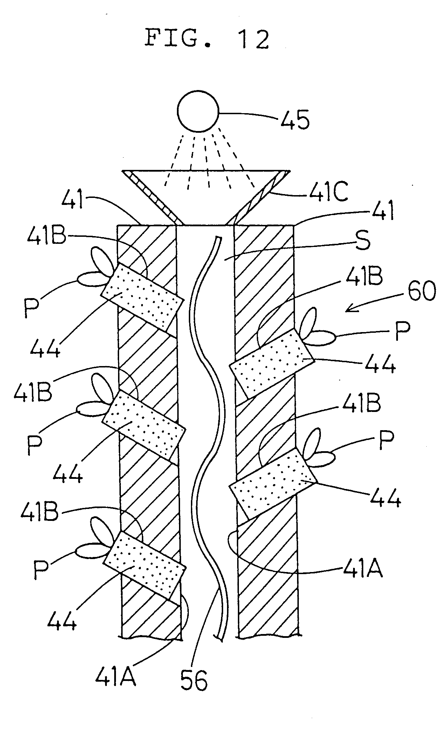

Fig. 12 is a upper side sectional view in the eithth embodiment of the present invention,

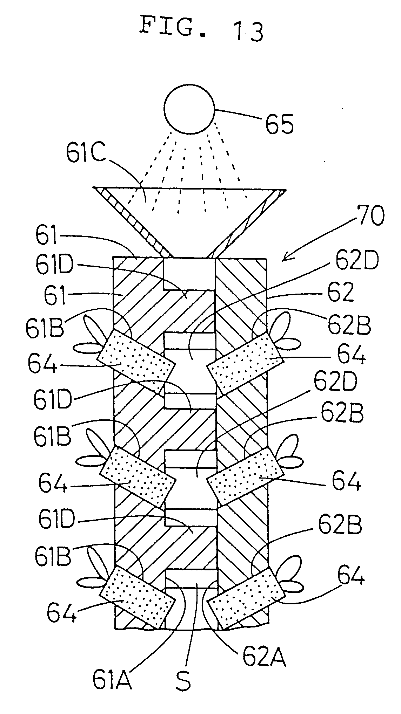

Figs. 13 to 15 each show the ninth embodiment of the present invention, and

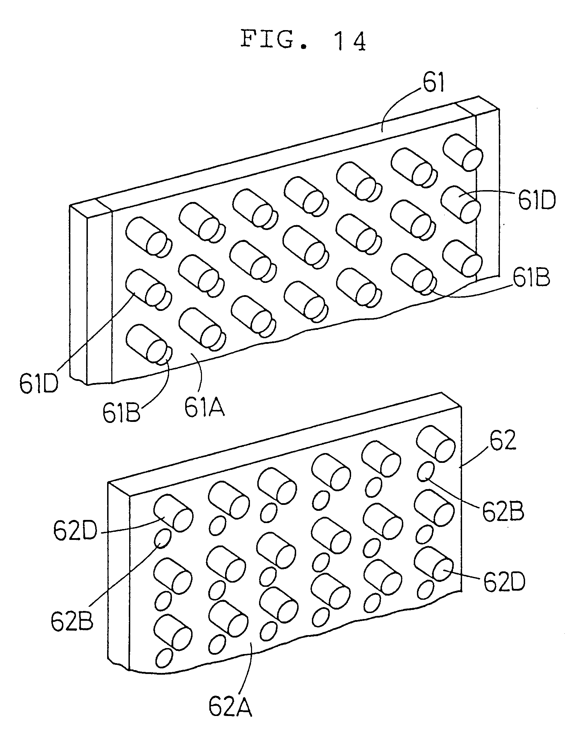

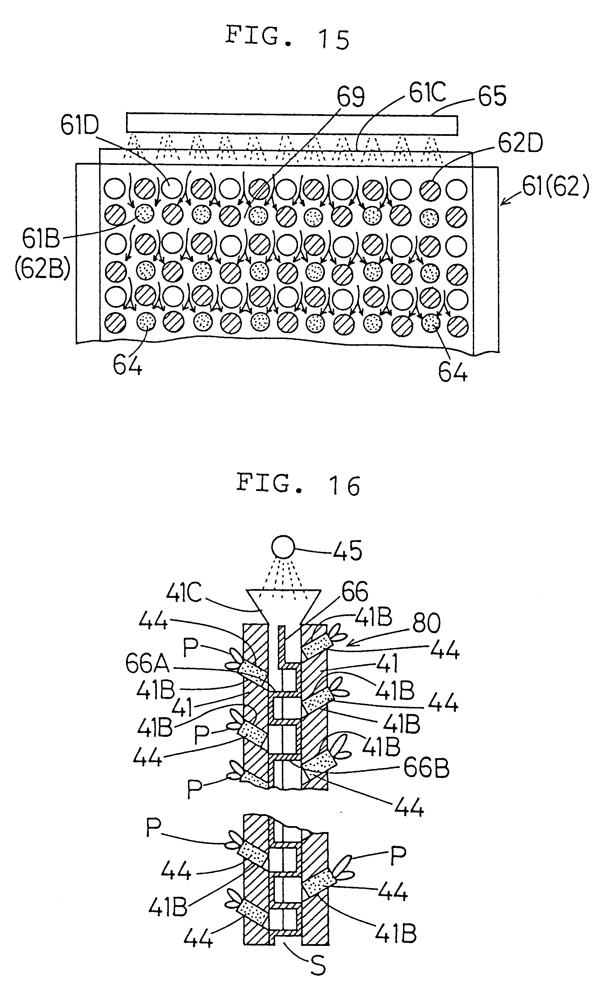

Fig. 13 is a upper side sectional view, Fig. 14 is a partially perspective view of the panel inside surface and Fig. 15 is a illustration view showing the water flow downward,

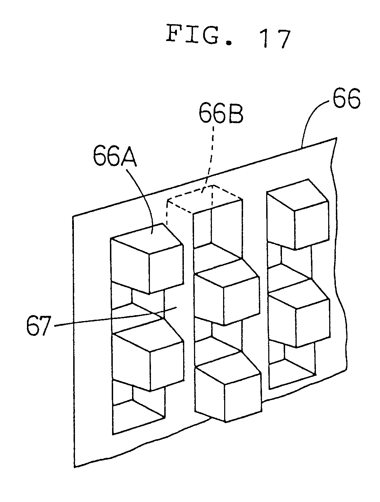

Figs. 16 and 17 each show the tenth embodiment of the present invention, and
Fig. 16 is a partially omitted side sectional view and Fig. 17 is a partially perspective view of the waterway panel,

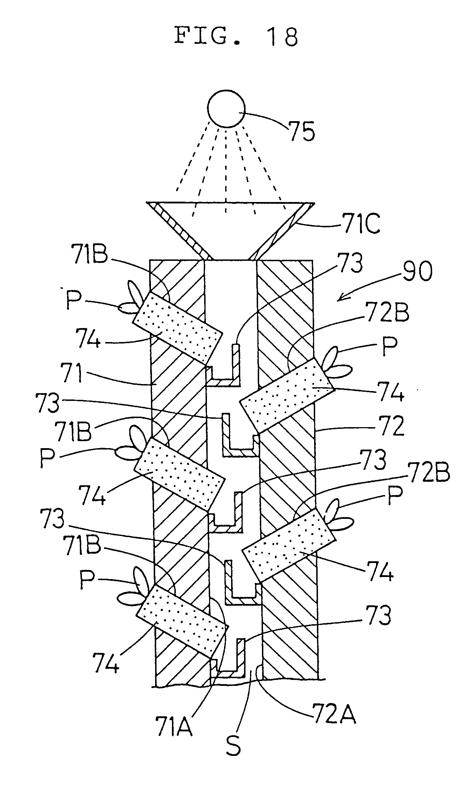

Figs. 18 to 20 each show the eleventh embodiment of the present invention, and

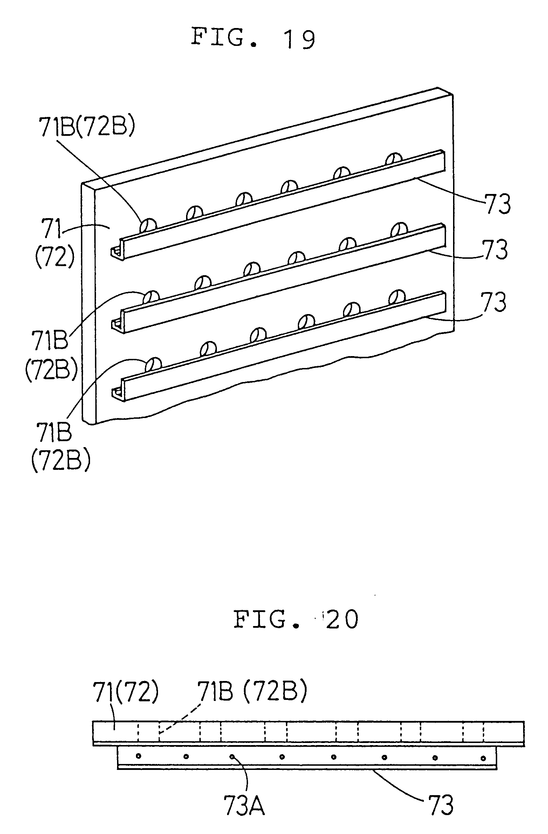

Fig. 18 is a upper side sectional view, Fig. 19 is a partially perspective view of the panel inside surface, and Fig. 20 is a plane view of the panel,
Fig. 21 is a partially perspective view of the panel inside surface in the twelveth embodiment,
Fig. 22 is a side sectional view in the prior art.

In the DRAWINGS,

| | |
|---|---|
| (11),(21),(31),(41),(51),(61), (62),(71),(72),(81) | Panel |
| (11)B,(21)B,(31)B,(41)B,(51)B, (61)B,(62)B,(71)B,(72)B,(81)B | Hole of panel |
| (14),(24),(34),(44),(54),(64), (74),(84) | Water-absorptive plug |
| (15),(25),(35),(45),(55),(65), (75),(85) | Water sprinkler |

### [DESCRIPTION OF THE INVENTION]

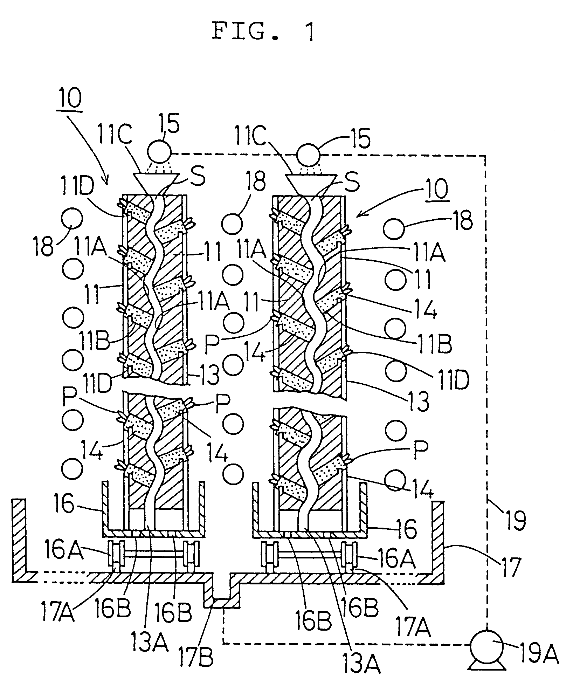

Figs. 1 to 4 each show an embodiment of the present invention. In the vertical plant-cultivating bed (10) shown in the Figures, a pair of perforated panels (11) are vertically installed with a space S between them and both sides of them are supported by side frames (13) so that the trough in the sine-curved corrugated inside surface (11)A of the one perforated panel (11) are confronted with the peak in that of (11)A of the other one (11), and in the inside surface of said frames (13), spacers (13)A intermediate between said perforated panels (11), and further, a water trough (11)C with a funnel-shaped section is installed over and upon the said space S.

The perforated panels (11) have a plural number of holes (11)B and each hole (11)B has its opening in the downward slopes of the corrugated inside surfaces (11)A of said panel (11), and said holes (11) are slanted from the outside to the inside, and the trough (11)D is formed on the outside opening of saidholes (11)B and a water-absorptive plug (14) supporting the plants P from the outside is inserted into each hole (11)B. The plants may include salad, lettuce, honewort, spinach, parsley, tomato, cucumber and the like.

Said perforated panels (11) are made of a plastic foam such as polystyrene, polypropylene, polyethylene, wood, fiberboard and the like, and the water-absorptive plug (14) is made of polyurethane foam, fibrous molded materials and the like.

A water sprinkler (15) is installed over and upon the pair of perforated panels (11) and said perforated panels (11) are fixed to a movable frame (16) with casters (16)A, and further, holes (16)B are made in the bottom of the movable frame (16).

Two or more of the vertical plant-cultivating beds (10) are placed on rails (17)A of a base frame (17) and a plural number of lamps (18) is horizontally fixed between the vertical plant-cultivating beds (10).

In the above-described structure, water is sprinkled from the water sprinkler (15) or blew water drops included the air. The water flows down into the water trough (11)C in the space S between the panels (11), and as shown in Fig. 4, the water is received on the corrugated inside surfaces (11)A of said panels (11) and then it expands and flows down uniformly toward said inside surfaces (11)A and is absorbed into the water-absorptive plugs (14) inserted from the outside into the holes (11)B of the panels (11). The absorbed water is, therefore, supplied to the plants P. The water may contain fertilizer and other additives. Since the holes (11)B of said panels (11) are slanted from the outside to the inside and the trough (11)D is installed on the outside opening, the water does not run out from the holes (11)B.

The water running down in the space S between the panels (11) flows onto the movable frame (16) and then it is flowed down onto the base frame (17) from the holes (16)B of said movable frame (16). The water flowed down to said frame (17) is circulated from a gutter (17)B to the water sprinkler (15) through the circulation pipe (20) by a pump (19).

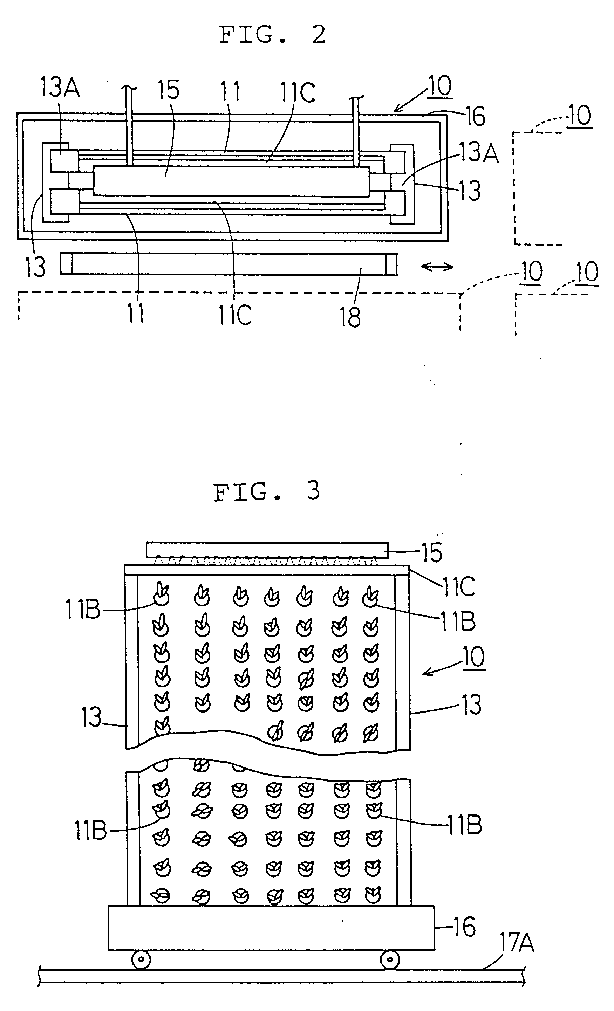

The water is supplied to the plants P supported by the water-absorptive plugs (14) and the plants grow through being irradiated by the light emitted from the lamps (18) and the lamps (18) are moved at a specified speed between the beds (10) as shown in Fig. 2, since the lamps (18) are moved at a specified speed as above described, the plants P can be irradiated with the light emitted from a closer distance without the problem of thermally damaging the plants P and the beds (10) are, therefore, able to be installed closer to each other. Further, the beds (10) may be moved not moving the lamps (18). The mutual speed against bed (10) of lamp (18) is supposed that plants P to be normally irradiated by thelight emitted be 12 hours/day.

Fig. 5 shows the second embodiment of the present invention. In this embodiment, fiber entangled mat such as polypropylene, polyethylene, polyamide, metal and the like, and a material having water permeability (21) of plastic continuation foam and the like are intermediated between the panels (11) and then the flow rate of the water may be controlled and dispersed.

Fig. 6 shows the third embodiment of the present invention. In this embodiment, the holes (11)B of the panel (11) are made at the peak of the corrugated inside surface (11)A and may be made on the slope toward the upper in the out of this embodiment. Further, the panels (11) may be relatively installed on the peak of the corrugated inside surfaces (11)A as shown in Fig. 7.

Fig. 8 shows the fourth embodiment of the present invention. In this embodiment, the corrugated shape of the inside surface (21)A of the panel (21) having a plural number of holes (21)B may be a chevron shape.

Fig. 9 shows the fifth embodiment of the present invention. In this embodiment, the corrugated shape of the inside surface (31)A of the panel (31) having a plural number of holes (31)B may be a palse shape.

Fig. 10 shows the sixth embodiment of the present invention. In the vertical plant-cultivating bed (40) shown in the Figure, a pair of perforated panels (41) are vertically installed with a space S between them, and fiber entangled mat and the material having water permeability (46) of plastic continuation foam and the like, which is a similar to the second embodiment, is inserted in the space S between the perforated panels (41), and a water trough (41)C with a funnel-shaped section is installed over and upon the said space S, and a water sprinkler (45) is placed on the straight above. Further, the holes (41)B of said panels (41) are slanted from the outside to the inside.

The water sprinkled from the water sprinkler (45) intermediate the water trough (41)C and flows downward into the space S between the panels (41). The water is dispersed by the material having water permeability (46) and flows down uniformly toward the inside surfaces (41)A of the panels (41) and it is absorbed into the water-absorptive plugs (44) inserted from the outside into the holes (41)B of the panels (41). The absorbed water is, therefore, supplied to the plants P. Since the holes (41)B of the panels (41) are slanted from the outside to the inside, the water does not run out from the holes (41)B.

Fig. 11 shows the seventh embodiment of the present invention. In the vertical plant-cultivating bed (50) shown in the Figure, a perforated panel (51) is vertically installed with a little inclined. A sine-curved corrugated panel (56) is formed near by the inside surface (51)A of the said perforated panel (51), a water trough (51)C with a funnel-shaped section is installed over and upon the upper edged of the space S between said panel (51) and the corrugated panel (56), and a movable water sprinkler (55) is installed on the straight above of the trough (51)C. Said corrugated panel (56) is made of plastic and metal such as stainless steel, aluminum, polypropylene, polyethylene, polystyrene, polyvinyl-chloride and the like.

The water sprinkler (55) enables the water to disperse uniformly, since the water sprinkler (55) goes and back with a specific speed along the water trough (51), and the water sprinkled intermediates the trough (51)C and flows into the space S between the panel (51) and the corrugated panel (56) and it is controlled the rate of flow down and flows down uniformly by said corrugated panel (56), and it is absorbed into the water-absorptive plug (54) inserted from the outside into the holes (51) B of the panel (51). The absorbed water is, therefore, supplied to the plants P. Since said panel (51) is a little inclined and the holes (51)B are also slanted from the outside to the inside, the water does not run out to the outside of the hole (51)B. Further, in the case of this embodiment, as the panel (51) is a little inclined, it can be fully obtained the natural light. Accordingly, lamps are not always necessary.

Fig. 12 is shows the eighth embodiment of the present invention. In the vertical plant-cultivating bed (60) shown in the Figure, a pair of perforated panels (41) which is a similar to the sixth embodiment are vertically installed with a space S between them wherein the corrugated panel (56), the same as the seventh embodiment, is formed between the inside surfaces (41)A of the panel (41) and a little space S, and further, a water trough (41)C with a funnel-shaped section is installed on the upper edge of the space S.

Said panels (41) have a plural number of holes (41)B and each hole (41)B has its opening toward the space S between said panels (41), and the holes (41)B are slanted from the outside to the inside and a water-absorptive plug (44) supporting the plants P is inserted into each hole (41)B.

In the above described structure, the water is sprinkled from the water sprinkler (45). The water flows down to the space S between the panels (41). The water is dispersed by the corrugated panel (56) between the panel (41) and flows down uniformly, and is absorbed into the water-absorptive plugs (44) inserted into the holes (41)B of the panels (41). The absorbed water is, therfore, supplied to the plants P. Since the holes (41)B are slanted from the outside to the inside, the water does not run out to the outside from the holes (41)B.

Figs. 13 to 15 each show the ninth embodiment of the present invention. In the vertical plant-cultivating bed (70) shown in the Figures, perforated panels (61) ,(62) are vertically installed and the columnar projections (61)D,(62)D is alternatively installed on the inside surfaces (61)A,(62)A of the panels (61),(62), and a water trough (61)C with a funnel-shaped section is installed on the upper edge of the space S between the panels (61),(62) corresponding to the length of convexity (61)D,(62)D.

Said panels (61),(62) have a plural number of holes (61) B,(62)B and the holes (61)B,(62)B are slanted from the outside to the inside and a water-absorptive (64) supporting the plants P is inserted into each hole (61) B,(62)B.

A water sprinkler (65) is installed over and upon a pair of panels (61),(62).

In the above described structure, the water is sprinkled from the water sprinkler (65). The water flows down in the space S between the panels (61),(62) by the water trough (61)C, and as shown in Fig. 15, the water is received on the projections (61)D,(62)D of the panels (61),(62) and run into the water path (69) formed betwen said projections (61)D,(62)D and it then expands and flows down uniformly to the water path (69) and is absorbed into the water-absorptive plugs (64) inserted into the holes (61)B,(62)B of the panels (61),(62). The absorbed water is, therefore, supplied to the plants P. Since the holes (61)B,(62)B are slanted from the outside to the inside, the water does not run out from the holes (61)B,(62)B.

Figs. 16 and 17 each show the tenth embodiment of the present invention. In the vertical plant-cultivating bed (80), a water guide panel (66) which is a metal panel formed the prismatic projections (66)A,(66)B to both outside and inside surfaces in a space S between a pair of perforated panels (41) having a plural number of holes (41)B, the same as the sixth embodiment, is intermediated and a water path (67) is formed between the projections (66)A,(66)B, and the water sprinkled from the water sprinkler (45) is supplied to the plants P supported by the water-absorptive plug (44) in the holes (41)B of the perforated panels (41) by the water path (67).

In addition to the above embodiment, the plant-cultivating bed may consist of one panel and one water path.

Figs. 18 to 20 each show the eleventh embodiment of the present invention. In the vertical plant-cultivating bed (90), a pair of perforated panels (71),(72) are vertically installed and a water trough (77)C with a funnel-shaped section is installed over and uppon the space S between the panels (71),(72).

Said panels (71),(72) have a plural number of holes (71) B,(72)B and the holes (71)B,(72)B are slanted from the outside to the inside, and a angled water receiver (73) is installed underside of the holes (71)B,(72)B, and a drain hole (73)A is formed at the bottom of said water receivers (73) shown in Fig. 20. The water-absorptive plug (74) supported the plants P is arranged in each hole (73).

A water sprinkler (75) is installed over and upon a pair of panels (71),(72).

In the above described structure, the water is sprinkled from the water sprinkler (75). The water flows down in the space S between the panels (71),(72) by the water trough (71)C, and then the water flowed down along the inside surface of the panel (71),(72) is received on the each water receiver (73) and it is absorbed into the water-absorptive plugs (74) inserted into the holes (71) B,(72)B of the panels (71),(72). The absorbed water is, therefore, supplied to the plants P and then it flows down from the drain holes (73)A of the water receivers (73). Since the holes (71)B,(72)B are slanted from the outside to the inside, the water does not run out from the holes (71)B,(72)B.

Fig. 21 shows the twelfth embodiment of the present invention. In this embodiment, a water receiver (83) is installed on each hole (81)B in the inside surface of the perforated panel (81) having a plural number of holes (81)B, and a drain hole (83)A is formed at the bottom of the water receivers (83).

In addition to the above embodiment, the plant-cultivating bed may consist of one panel and one water path.

## Claims

1. A vertical plant-cultivating bed comprising:
a perforated panel (11) oriented substantially vertically, or at a slight inclination to the vertical, the holes (11B) of said panel being adapted to hold water-absorptive plugs (14) carrying plants (P), said panel having a rear surface (11A), which is opposite to the surface from which the plants protrude; characterised by:
water distributing means disposed on or adjacent to the rear surface (11A) of said panel, a water sprinkler (15) for supplying water to said water distributing means and at least one lamp outside said perforated panel and movable relative thereto at a predetermined speed whereby water supplied by said sprinkler, in use, flows on said rear surface to said water-absorptive plugs.

2. A vertical plant-cultivating bed in accordance with claim 1 wherein said water distributing means comprises corrugations formed on the rear surface of said perforated panel.

3. A vertical plant-cultivating bed in accordance with claim 1 or 2 wherein there are two opposed perforated panels and said water distributing means comprises a water permeable material (21; 46) disposed therebetween.

4. A vertical plant-cultivating bed in accordance with claim 1, 2 or 3 wherein said water distributing means comprises a corrugated panel (56) disposed adjacent the rear surface of said perforated panel or panels.

5. A vertical plant-cultivating bed in accordance with claim 1, 2, 3 or 4 wherein said water distributing means comprises a plurality of projections (61D) formed on the rear surface of said perforated panel to guide the flow of water.

6. A vertical plant-cultivating bed in accordance with claim 1, 2, 3 or 4 wherein said water distributing means comprises a water guide panel (66) on which water paths are formed between a plurality of projections.

7. A vertical plant-cultivating bed in accordance with claim 1, 2, 3 or 4 wherein said water distribution means comprises a plurality of water receivers (73) below the holes in said perforated panel.

8. A vertical plant-cultivating bed in accordance with any one of claims 1 to 7 wherein the axes of said holes of said perforated panel are other than perpendicular to its plane.

9. A vertical plant-cultivating bed in accordance with any one of the preceding claims, further comprising plant-carrying water-absorptive plugs (14) in the holes.

10. A method of cultivating plants comprising the steps of: providing a plant-cultivating bed according to any one of claims 1 to 8, inserting plant-carrying water absorptive plugs in holes of the perforated panels; and watering said plants.

## Patentansprüche

1. Vertikales Pflanzenbeet mit:
einer perforierten Platte (11), die im wesentlichen vertikal oder mit einer geringen Neigung zur Vertikalen ausgerichtet ist, wobei die Löcher (11B) der Platte geeignet sind, wasserabsorptionsfähige Pfropfen (14), die Pflanzen (P) tragen, zu halten, wobei die Platte eine Rückseite (11A) hat, die der Seite gegenüberliegt, aus der die Pflanzen herausragen; gekennzeichnet durch:
eine Wasserverteilungseinrichtung, die an der oder angrenzend an die Rückseite (11A) der Platte angeordnet ist, eine Wasserberieselungseinrichtung (15) zum Zuführen von Wasser zu der Wasserverteilungseinrichtung und mindestens eine Lampe, die sich außerhalb der perforierten Platte befindet und relativ zu ihr mit einer vorbestimmten Geschwindigkeit beweglich ist, wodurch bei einem Betrieb Wasser, das von der Berieselungseinrichtung zugeführt wird, auf der Rückseite zu den wasserabsorbierenden Pfropfen strömt.

2. Vertikales Pflanzenbeet nach Anspruch 1, wobei die Wasserverteilungseinrichtung Wellungen aufweist, die auf der Rückseite der perforierten Platte ausgebildet sind.

3. Vertikales Pflanzenbeet nach Anspruch 1 oder 2, wobei zwei gegenüberliegende perforierte Platten vorhanden sind und die Wasserverteilungseinrichtung ein zwischen diesen angeordnetes, wasserdurchlässiges Material (21: 46) aufweist.

4. Vertikales Pflanzenbeet nach Anspruch 1, 2 oder 3, wobei die Wasserverteilungseinrichtung eine gewellte Platte (56) aufweist, die angrenzend an die Rückseite der perforierten Platte oder Platten angeordnet ist.

5. Vertikales Pflanzenbeet nach Anspruch 1, 2, 3 oder 4, wobei die Wasserverteilungseinrichtung mehrere Vorsprünge (61D) aufweist, die auf der Rückseite der perforierten Platte ausgebildet sind, um den Wasserstrom zu führen.

6. Vertikales Pflanzenbeet nach Anspruch 1, 2, 3 oder 4, wobei die Wasserverteilungseinrichtung eine Wasserführungsplatte (66) aufweist, auf der Wasserwege zwischen mehreren Vorsprüngen ausbebildet sind.

7. Vertikales Pflanzenbeet nach Anspruch 1, 2, 3 oder 4, wobei die Wasserverteilungseinrichtung mehrere Wasseraufnahmeeinrichtungen (73) unter den Löchern in der perforierten Platte aufweist.

8. Vertikales Pflanzenbeet nach einem der Ansprüche 1 bis 7, wobei die Achsen der Löcher der perforierten Platte anders als senkrecht zu ihrer Ebene sind.

9. Vertikales Pflanzenbeet nach einem der vorangegangenen Ansprüche, ferner mit pflanzentragenden, wasserabsorbierenden Pfropfen (14) in den Löchern.

10. Verfahren zum Anbau von Pflanzen mit den Schritten: Bereitstellen eines Pflanzenbeetes nach einem der Ansprüche 1 bis 8, Einfügen von pflanzentragenden, wasserabsorbierenden Pfropfen in Löcher der perforierten Platten und Bewässern der Pflanzen.

## Revendications

1. Support vertical pour culture de plantes comprenant:
un panneau perforé (11) orienté de façon sensiblement vertical, ou suivant une légère inclinaison par rapport à la verticale, les trous (11B) dudit panneau étant adaptés pour contenir des tampons (14) absorbeurs d'eau, supportant des plantes (P), ledit panneau comportant une surface arrière (11A) qui se trouve à l'opposé de la surface d'où les plantes font saillie, caractérisé par:
un moyen de distribution d'eau disposé sur la surface arrière (11A) dudit panneau ou de façon contiguë à cette surface arrière, une installation d'arrosage (15) pour alimenter en eau ledit moyen de distribution d'eau et au moins une lampe disposée à l'extérieur dudit panneau perforé et pouvant être déplacée par rapport à ce dernier à une vitesse prédéterminée, grâce à quoi l'eau fournie par ladite installation d'arrosage, pendant qu'elle est en service, s'écoule sur ladite surface arrière jusqu'auxdits tampons absorbeurs d'eau.

2. Support vertical pour culture de plantes selon la revendication 1, dans lequel ledit moyen de distribution d'eau comprend des ondulations formées sur la surface arrière dudit panneau perforé.

3. Support vertical pour culture de plantes selon la revendication 1 ou 2 dans lequel se trouvent deux panneaux perforés opposés et ledit moyen de distribution d'eau comprend un matériau (21; 46) perméable à l'eau disposé entre ces panneaux.

4. Support vertical pour culture de plantes selon la revendication 1, 2 ou 3, dans lequel ledit moyen de distribution d'eau comprend un panneau ondulé (56) disposé de façon adjacente à la surface arrière dudit ou desdits panneaux perforés.

5. Support vertical pour culture de plantes selon la revendication 1, 2 ou 3 ou 4, dans lequel ledit moyen de distribution d'eau comprend une pluralité de saillies (61D) formées sur la surface arrière dudit panneau perforé pour guider l'écoulement de l'eau.

6. Support vertical pour culture de plantes selon la revendication 1, 2, 3 ou 4, dans lequel ledit moyen de distribution d'eau comprend un panneau (66) de guidage d'eau sur lequel des chemins d'eau sont formés entre une pluralité de saillies.

7. Support vertical pour culture de plantes selon la revendication 1, 2, 3 ou 4 dans lequel ledit moyen de distribution d'eau comprend une pluralité de récepteurs d'eau (73) en dessous des trous dudit panneau perforé;

8. Support vertical pour culture de plantes selon les revendications 1 à 7, dans lequel les axes desdits trous dudit panneau perforé ne sont par perpendiculaires au plan de celui-ci.

9. Support vertical pour culture de plantes selon l'une quelconque des revendications précédentes, comprenant en outre des tampons (14) absorbeurs d'eau dans les trous.

10. procédé de culture de plantes comprend les étapes consistant: à réaliser un support pour culture de plantes selon l'une quelconque des revendications 1 à 8; à insérer dans les trous des panneaux perforés des tampons absorbeurs d'eau supportant des plantes; et à arroser lesdites plantes.
